# EUROPÄISCHE PATENTANMELDUNG

(11) **EP 0 764 597 A2**
(43) Veröffentlichungstag der Anmeldung: **26.03.1997**
(21) Anmeldenummer: 96250193.8
(22) Anmeldetag: 07.09.1996
(51) Int. Cl.: B65G 1/133

(54) **Umlauflager-Anlage**

(30) Priorität: 07.09.1995 DE 29514925 U
(71) Anmelder: LOUIS SCHIERHOLZ GMBH & CO.KG, D-28277 Bremen (DE)
(72) Erfinder: Hammerschmidt, Detlef Dipl.-Ing. Dipl.-Wirtsch.-In, 28857 Syke (DE)
(74) Vertreter: Patentanwälte Wenzel & Kalkoff

(57) **Zusammenfassung**

Eine Umlauflager-Anlage (A,P) umfaßt mehrere in einer Richtung bewegbare Einzelstränge (I-V) von Warenträgern (1) sowie eine Aufgabe- und eine Abgabestation (A). Die Einzelstränge (I-V) sind entlang endloser vorgegebener Bahnen (2) bewegbar. Um bei einer solchen Anlage (A,P) den Platzbedarf bei größeren Lagerkapazitäten zu verringern und eine Kompaktanordnung im Lager- und Kommissionierbereich (P) zu schaffen, sind die Einzelstrangbahnen (I-V) ineinander geschachtelt angeordnet, und jeder Einzelstrang (2) ist nach Art eines Zuges ausgebildet, der kürzer als die Hälfte der kürzesten Einzelstrang-Bahn (2,21) ist, während in einem Parkbereich (P) die Einzelstränge (2) parallel nebeneinander, im Abstand durch die Warenträgertiefe (1) bestimmt, angeordnet und außerhalb des Parkbereiches (P) die Stränge (2) abstandslos gebündelt sind. Damit wird es gerade für größere Lager (P) wie Warenkommissionierung, Spulenspeicher in der Textilindustrie, Trolley-Speicher im Luftfahrtcatering und Fahrradspeicher möglich, die reinen Lagerbereiche (P) extrem platzsparend unmittelbar nebeneinander anzuordnen und den Platz zwischen den parallelen Strängen (2) des zweiten und jedes weiteren Umlauflagers (1) einzusparen.

## Beschreibung

Die Erfindung betrifft eine Umlauflager-Anlage, umfassend eine Mehrzahl von in mindestens einer Richtung bewegbaren Einzelsträngen von Warenträgern sowie eine Aufgabe- und eine Abgabestation, wobei die Einzelstränge entlang endloser vorgegebener Bahnen bewegbar sind.

Bei einem bekannten Umlauflager dieser Art, das in einem Prospekt der Firma Eisenmann dargestellt und mit Normtype UL 606 bezeichnet ist, transportieren zwei horizontal umgelenkte Ketten die an einer Schiene aufgehängten Warenträger. Das Umlauflager ist als Norm-Baukastensystem aufgebaut und wird beispielsweise als Zwischenpuffer vor Montagebändern, als Kommissionierlager oder als kombiniertes Kommissionier- und Vorratslager eingesetzt. Mehrere solcher Umlauflager sind als Umlauflager-Anlage parallel zueinander angeordnet, und die Beschickung jedes derselben erfolgt üblicherweise an einer Stirnseite, während Entnahme und Übergabe z.B. an Montagebänder an der zweiten, entgegengesetzten Stirnseite vorgesehen sind. Bei Einsatz als Kommissionierlager können zusätzliche Fördersysteme wie ein Unterflurfördersystem vorgesehen sein. Trotz der Parallelanordnung der Lager und der sich daraus ergebenden übersichtlichen und variablen Staukapazität erfordert jedes Einzellager - in der Grundfläche, also der Draufsicht betrachtet - mindestens den Raum zwischen den beiden Transporttrums, der dem Durchmesser der Umlenkräder entspricht, sowie einen seitlichen Gang zum Nachbarlager. Dieser erhöhte Platzbedarf macht sich besonders dann nachteilig bemerkbar, wenn, was beim praktischen Einsatz für höhere Lagerkapazitäten regelmäßig vorkommt, eine größere Mehrzahl, in der Regel über vier Lager parallel anzuordnen sind, zumal je Einzel-Umlauflager eine Aufgabe- und eine Abgabestation erforderlich sind.

Weitere Umlauflager-Systeme dieser Art, die auf dem gleichen Prinzip aufbauen, allerdings im Detail Varianten zeigen, sind in Veröffentlichungen wie VDI Verlag 9/93 "Logistik im Unternehmen", Seite 32 bis 34, einem Prospekt der Firma Seibert-Stinnes als Umlaufregal-System SUSTAMAT, einem Prospekt der Firmengruppe Electrolux-Constructor als Horizontal-Karussell-System HOCA sowie einem weiteren Prospekt der Firma psb GmbH Förderanlagen + Lagertechnik, Pirmasens, hier mit der Bezeichnung 9.992.0214.704, dargestellt. Das Problem des hohen Platzbedarfs ist bei allen diesen Systemen vorhanden, wird jedoch nur teilweise, beispielsweise durch Aufstellungsvarianten der Einzellager um einen bestimmten Be- oder Entladebereich herum, angegangen, ohne daß die Grundanordnung der Parallelität der beiden Trums jedes Einzellagers mit dem Abstand entsprechend dem Durchmesser der Umlaufräder dazwischen verlassen wird.

Ziel der vorliegenden Erfindung ist es, den Platzbedarf insbesondere bei größerer Lagerkapazitäten zu verringern und eine Umlauflager-Anlage der eingangs beschriebenen Art mit Kompaktanordnung im Lager- und Kommissionierbereich zu schaffen.

Diese Aufgabe wird erfindungsgemäß bei einer Umlauflager-Anlage der angegebenen Grundanordnung dadurch gelöst, daß die Bahnen der Einzelstränge ineinander geschachtelt angeordnet sind und jeder Warenträger-Einzelstrang nach Art eines Zuges ausgebildet ist, dessen Länge weniger als die Hälfte der kürzesten Einzelstrang-Bahn beträgt, und daß in einem Parkbereich der Anlage die Einzelstränge parallel nebeneinander, im Abstand im wesentlichen nur durch die Tiefe der Warenträger bestimmt, angeordnet sind, während außerhalb des Parkbereiches die Stränge im wesentlichen abstandslos gebündelt sind. Durch die erfindungsgemäße Schachtelung der Einzelstränge ineinander wird es möglich, die reinen Lagerbereiche in extrem platzsparender Weise unmittelbar nebeneinander anzuordnen, während man einen praktisch parallel zu dem Lagerbereich liegenden Aufgabe- und Abgabebereich vorsehen kann, in dem die Bahnen der Einzelstränge unmittelbar, d.h. ohne Rücksicht auf die Breite der Warenträger, nebeneinander angeordnet sein können, indem zur Auf- bzw. Abgabe jeweils nur ein Zug in diesem Bereich anwesend ist. Gerade für größere Lager, wie sie vornehmlich für die Warenkommissionierung, als Spulenspeicher in der Textilindustrie, als Trolley-Speicher im Catering, speziell im Luftfahrtwesen, und gegebenenfalls auch als Fahrradspeicher in Betracht kommen, wird bei Einsatz der erfindungsgemäßen Anlage der Platz zwischen den beiden parallelen Strängen des zweiten und jedes weiteren Umlauflagers eingespart; denn der zwischen den beiden Trums vorhandene Platz wird praktisch nur einmal an der Umlenkung des innersten Lagerbereichstrangs zum Auf- und Abgabereich hin erforderlich, während die übrigen Teilumlenkungen an den Stirnseiten immer im Bereich des nächsten Stranges liegen. Durch die Zugbildung ergeben sich darüber hinaus Vorteile einer schnellen Warenbereitstellung, indem man einerseits die Ware zum Mann transportiert, während man andererseits über einen wegoptimierten Zugriff zu der Ware die Möglichkeit des Zugriffs auf eine hohe Zahl von Lagerstellen erhält, was man noch durch Vor- und Rückwärtslauf der Züge verbessern kann. Man erkennt, daß die erfindungsgemäße Anlage also neben dem geringeren Platzbedarf gerade auch zur Senkung von Personalkosten geeignet ist.

Vorteilhaft bietet eine fakultativ vorgesehene Kombination von Auf- und Abgabestelle neben geringerem Raumbedarf eine hervorragende Voraussetzung für den Einsatz eines Auf- und Abgabeautomaten.

Um den Raumbedarf weiter zu senken, können neben dem bereits erwähnten, bevorzugten Zusammenfallen von Auf- und Abgabestation die einzelnen Stränge außerhalb des Parkbereiches in einem wesentlichen Teil der Anlage unter Zwischenschaltung von Weichen am Anfang und Ende des Parkbereiches in eine Bahn zusammenfallend angeordnet sein. Mit anderen Worten kann man Herstellungskosten und den Bedarf an Platz für nebeneinanderliegende Bahnen vor allem im Ladebereich wesentlich reduzieren, indem nur noch ein Einzelstrang angeordnet wird, in den die einzelnen Stränge aus dem Parkbereich mittels Weichen einmünden.

Um eine möglichst individuelle Betätigung der einzelnen Züge zu ermöglichen, kann jeder Einzelstrang mit einem Antrieb versehen sein. Es ist aber nicht auszuschließen, daß aus Kostengründen ggf. auch nur ein Gesamtantrieb für die Anlage vorgesehen wird, vor allem dann, wenn mit Weichen gearbeitet wird.

Zweckmäßigerweise kann man für die Stränge bzw. für die Züge an der Bahn stationäre Antriebselemente anordnen, und zwar sinnvollerweise an Stellen, die für die Wartung leicht zugänglich sind. Die Antriebselemente können als Reibschluß- oder Linearmotorantriebe ausgebildet sein, je nachdem, welche Funktion die Anlage erfüllen soll. Indessen ist es aber auch möglich, als Antrieb mindestens einen formschlüssig in die Warenträger eingreifenden bzw. an diesen angreifenden endlosen Zahnriemen vorzusehen. Die Art des Antriebes richtet sich ganz nach Funktion, Auslegung und Einsatzbereich der Anlage sowie den vorhandenen Raumverhältnissen.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine Draufsicht auf ein Anlagenschema einer ersten Ausführungsform der Erfindung und
- Fig. 2: eine Draufsicht auf einen Teil einer Anlage in abgewandelter Ausführungsform.

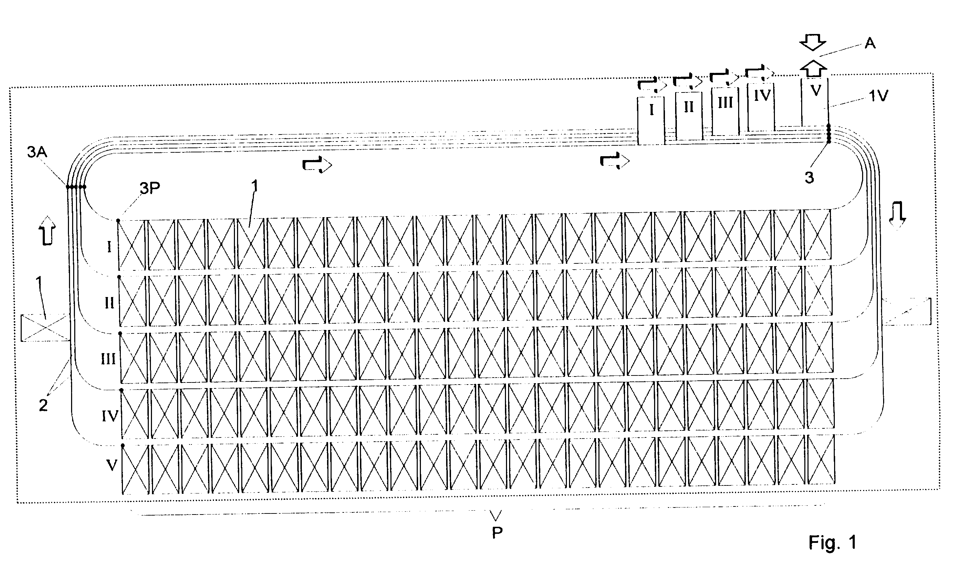

In der in Fig. 1 gezeigten Ausführungsform einer Umlauflager-Anlage, wie sie insbesondere für ein Spulenlager oder ein Kommissionierlager geeignet ist, sind in einem Parkbereich P insgesamt fünf Stränge mit fünf Zügen I bis V von Warenträgern 1, jeweils dargestellt durch ein Rechteck, vorgesehen, die in jeweils einer Bahn 2 geführt werden. Es ergeben sich also insgesamt fünf Bahnen, die im Parkbereich P durch die Tiefe der Warenträger 1 voneinander getrennt und zueinander parallel angeordnet sind. Diese Bahnen führen zu einem Aufund Abgabebereich A, der durch zwei Pfeile im Sinne des Aufgebens bzw. Abnehmens von Waren auf einen bzw. von einem hier schematisch für den Zug V dargestellten Warenträger 1V wiedergegeben ist. Die links von diesem Warenträger 1V angeordneten Warenträger zeigen die Positionen der Züge I bis IV kurz vor der Auf- und Abgabestelle A. Man erkennt daraus, daß die Bahnen dieser Züge I bis V in dem Arbeits- oder Auf/Abgabebereich unmittelbar nebeneinander angeordnet sein können, da jeweils nur ein Zug in diesem Bereich anwesend sein soll, während sich die übrigen Züge in dem Parkbereich P befinden. Damit ergibt sich im Parkbereich eine kompakte Nebeneinanderanordnung der Züge I bis V im beladenen, teilbeladenen oder unbeladenen Zustand, je nachdem, welche Lagersituation momentan zutrifft, und die Züge können einzeln in den Auf- und Abgabebereich A vorfahren, in dem sie sich dann mit ihrer ganzen Längserstreckung befinden können, wobei sie bis zu angedeuteten Haltepunkten 3 mit demjenigen Warenträger 1 vorfahren, der gerade be- bzw. entladen werden soll. Dieser befindet sich in der Position des angedeuteten Wagens 1V.

Weitere solcher Haltepunkte sind zweckmäßigerweise vor Einfahrt in den kompaktstrangigen Arbeitsbereich, hier mit 3A bezeichnet, und am Ende jeder Parkstrecke, hier mit 3P bezeichnet, vorgesehen. In Parkposition wird also der vorderste Warenträger jedes Zuges am Haltepunkt 3P halt machen. Wenn ein Zug in den Arbeitsbereich eingefahren ist, wird er entsprechend der Zahl und Beladezeiten der einzelnen Warenträger intermittierend voranbewegt, wobei durch die Länge des Arbeitsbereiches, die nur geringfügig größer als die Zuglänge zu sein braucht, gewährleistet ist, daß selbst dann, wenn sich der vorderste Warenträger an dem Arbeitsbereich-Haltepunkt 3 befindet, der letzte Wagen auf jeden Fall auf der Arbeitsbereichstrecke ist. Wenn die Wagen abschnittsweise weiterbewegt werden, so fahren die vordersten wieder in den Parkbereich, also jenseits des Haltepunktes 3, ein. Zugleich kann der nächste zu bearbeitende Zug aber schon aus seiner Parkposition bis an den entsprechenden Haltepunkt 3A herangeführt und bereitgestellt werden, so daß keinerlei maßgebliche Verzögerungen in der Bewegung zum Be- bzw. Entladen bei A entstehen.

Wie aus Fig. 1 erkennbar, ist der Gesamt-Raumbedarf im wesentlichen durch das gepunktete Um-Rechteck bestimmt, das eine geringere Fläche einnimmt, als wenn beispielsweise eine entsprechende Zahl einzelner Umlauflager nach dem Stand der Technik vorgesehen sein müßte.

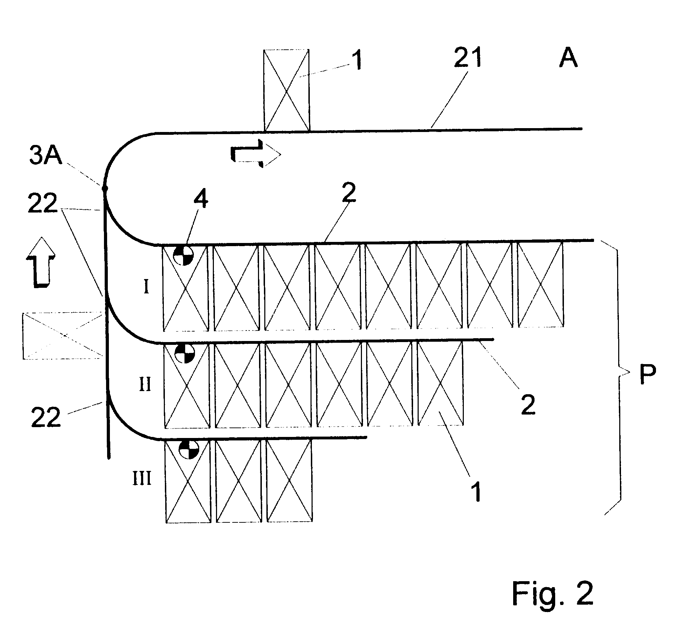

In Fig. 2 erkennt man, daß im Arbeitsbereich einer abgewandelten Ausführungsform nur noch ein einziger Bahnstrang 21 vorhanden ist, in den die Einzelstränge 2 des Parkbereiches P jeweils mittels Weiche 22 einlaufen, wobei auch hier ein Haltepunkt 3A vor dem Beginn des Arbeitsbereiches A vorgesehen ist.

Weiter sind in dieser Darstellung Antriebe 4, die in Fig. 1 der Übersicht halber nicht dargestellt wurden, gezeigt, die entweder stationär in der Anlage, und zwar, wie hier angedeutet, für jeden Strang, oder aber für jeden Zug an dessen vorderstem Warenträger 1 einzeln vorgesehen sein können.

Insgesamt erkennt man also, daß von der Erfindung eine sowohl im Park- als auch im Arbeitsbereich äußerst kompakt ausgebildete Umlauflager-Anlage geschaffen werden kann, die einen schnellen, personalunaufwendigen Zugriff zu den einzelnen Warenträgern erlaubt.

## Patentansprüche

1. Umlauflager-Anlage, umfassend eine Mehrzahl von in mindestens einer Richtung bewegbaren Einzelsträngen (I-V) von Warenträgern (1) sowie eine Aufgabe- und eine Abgabestation (A), wobei die Einzelstränge entlang endloser vorgegebener Bahnen (2) bewegbar sind, **dadurch gekennzeichnet,** daß die Bahnen (2) der Einzelstränge (I-V) ineinander geschachtelt angeordnet sind und jeder Warenträger-Einzelstrang nach Art eines Zuges ausgebildet ist, dessen Länge weniger als die Hälfte der kürzesten Einzelstrang-Bahn beträgt, und daß in einem Parkbereich (P) der Anlage die Einzelstränge parallel nebeneinander, im Abstand im wesentlichen nur durch die Tiefe der Warenträger bestimmt, angeordnet sind, während außerhalb des Parkbereiches die Stränge im wesentlichen abstandslos gebündelt sind.

2. Umlauflager-Anlage nach Anspruch 1, **dadurch gekennzeichnet,** daß Auf- und Abgabestation (A) zusammenfallend angeordnet sind.

3. Umlauflager-Anlage nach Anspruch 1 oder 2, **dadurch gekennzeichnet,** daß die Bahnen (2) die Stränge (I-V) außerhalb des Parkbereiches (P) in einem wesentlichen Teil der Anlage unter Zwischenschaltung von Weichen (22) am Anfang und Ende des Parkbereiches in eine Sammeistrecke (21) zusammenfallend angeordnet sind.

4. Umlauflager-Anlage nach Ansprüche 1 bis 3, **dadurch gekennzeichnet,** daß jeder Einzelstrang (I-V) mit einem Antrieb (4) versehen ist.

5. Umlauflager-Anlage nach Ansprüche 1 bis 4, **dadurch gekennzeichnet,** daß für die Stränge (I-V) bzw. Züge stationär an der Bahn (2) Antriebselemente (4) angeordnet sind.

6. Umlauf lager-Anlage nach Anspruch 5, **dadurch gekennzeichnet,** daß die Antriebselemente als Reibschlußantrieb oder Linearmotorantrieb ausgebildet sind.

7. Umlauflager-Anlage nach einem der Ansprüche 1 bis 4, **dadurch gekennzeichnet,** daß als Antrieb mindestens ein formschlüssig in die Warenträger (1) eingreifender bzw. an den Warenträgern angreifender endloser Zahnriemen vorgesehen ist.
